# EUROPÄISCHE PATENTSCHRIFT

(11) **EP 3 259 455 B1**
(45) Veröffentlichungstag und Bekanntmachung des Hinweises auf die Patenterteilung: **02.09.2020**
(21) Anmeldenummer: 16714858.4
(22) Anmeldetag: 04.04.2016
(51) Int. Cl.: F01D 25/28, B65G 7/00

(54) **HEBE- UND TRANSPORTVORRICHTUNG FÜR EINE SCHWERLAST**
LIFTING AND TRANSPORTATION DEVICE FOR A HEAVY LOAD
SYSTEME DE LEVAGE ET DE TRANSPORT DE CHARGE LOURDES

(30) Priorität: 21.04.2015 DE 102015207181
(43) Veröffentlichungstag der Anmeldung: 27.12.2017
(73) Patentinhaber: Siemens Aktiengesellschaft, 80333 München (DE)
(72) Erfinder: LINKE, Dietmar, 91074 Herzogenaurach (DE)
(86) Internationale Anmeldenummer: PCT/EP2016/057311
(87) Internationale Veröffentlichungsnummer: WO 2016/169751

(56) Entgegenhaltungen:
- CH-A5- 626 856
- CH-A5- 626 856
- DE-A1- 4 126 728
- DE-A1- 4 126 728
- GB-A- 2 079 728
- GB-A- 2 154 543
- JP-A- S5 126 701
- JP-U- S5 391 178
- US-A- 4 392 662
- US-A- 5 575 607
- US-A- 5 653 351
- US-A1- 2012 055 898
- Fagioli: "Fagioli - Gantry Cranes lifting of a generator", Youtube, 12 September 2012 (2012-09-12), page 1, XP054978845, Retrieved from the Internet: URL:https://www.youtube.com/watch?v=suaaSB bMVOo [retrieved on 2018-11-08]

## Beschreibung

Die Erfindung betrifft eine Hebe- und Transportvorrichtung zum Heben und Transportieren einer Schwerlast, umfassend ein zumindest in einer horizontalen Verfahrrichtung vor und zurück verfahrbares Gestell mit vier vertikalen Stützen veränderbarer Länge, die unter Zuordnung jeweils einer Hubeinrichtung als Hebestützen ausgebildet sind, und an dem Gestell vorgesehene Befestigungsmittel zum lösbaren Anbringen der Schwerlast. Weiterhin betrifft die vorliegende Erfindung ein Verfahren zum Transportieren einer Schwerlast mit einer erfindungsgemäßen Hebe- und Transportvorrichtung.

Hebe- und Transportvorrichtungen der eingangs genannten Art sind im Stand der Technik in unterschiedlichsten Ausgestaltungen bekannt und dienen dazu, eine Schwerlast an einem Ausgangsort anzuheben, die angehobene Schwerlast durch horizontales Verfahren zu transportieren und an einem Zielort abzusetzen.

Eine solche Aufgabe stellt sich beispielsweise, wenn in einer Kraftwerkanlage stromerzeugende Generatoren zu Wartungs- oder Austauschzwecken von ihrem Betriebsort entfernt oder an ihren Betriebsort verbracht werden müssen. In den Kraftwerkshallen herkömmlicher Kraftwerkanlagen ruhen die Generatoren zumeist auf Sockeln, die gegenüber dem umgebenden Boden erhaben sind. Dabei kann die Sockelhöhe bis zu 3,5 m betragen. In einem Revisions- bzw. Austauschfall stellt sich daher konkret das Problem, einen Generator von einem sockelförmigen Maschinenfundament auf eine fahrbare Plattform mit mehreren Achsen (Modulfahrzeug, Self-Propelled Modular Transporter SPMT) zu verladen, die auf dem umgebenden Boden, insbesondere vor der Kraftwerkshalle positioniert ist.

Bekannte Hebe- und Transportvorrichtungen zum Heben und Transportieren einer Schwerlast umfassen zumeist ein Gestell mit rechteckiger Grundfläche, das in einer horizontalen Verfahrrichtung vor und zurück verfahren werden kann. Das Gestell weist an den Ecken seiner Grundfläche vier vertikale Stützen veränderbarer Länge auf, die unter Zuordnung jeweils einer Hubeinrichtung als Hebestützen ausgebildet sind. Die Hubeinrichtungen sind dazu ausgelegt, die Länge der Hebestützen zu verändern, wenn das Gestell mit der Gewichtskraft der Schwerlast beaufschlagt ist. Ferner sind an dem Gestell Befestigungsmittel vorgesehen, die derart ausgebildet sind, dass die Schwerlast sicher an dem Gestell befestigt werden kann. Durch synchrones Verlängern der vertikalen Stützen lässt sich die an dem Gestell befestigte Schwerlast anheben, während ein zeitgleiches Verkürzen der vertikalen Stützen ein Absenken der Schwerlast bewirkt.

Zum Transportieren einer Schwerlast wird die Hebe- und Transportvorrichtung zunächst derart über die Schwerlast verfahren, dass jeweils zwei vertikale Stützen auf gegenüberliegenden Seiten der Schwerlast positioniert sind. Nach dem Befestigen der Schwerlast an dem Gestell werden die Hebestützen weiter verlängert, um die an dem Gestell befestigte Schwerlast anzuheben. Dann wird das Gestell mit angehobener Schwerkraft horizontal zum Zielort verfahren.

In einer Kraftwerkshalle kann allerdings der zur Verwendung einer solchen Hebe- und Transportvorrichtung erforderliche Raum fehlen. Beispielsweise lässt sich die Hebe- und Transportvorrichtung nicht über einen auf einem Sockel ruhenden Generator verfahren, wenn seitlich des Sockels kein ausreichender Platz für die Stützen des Gestells zur Verfügung steht.

Weitere Hebe- und Transportvorrichtungen sind in den Druckschriften DE 41 26 728 A1, CH 626 856 A5, US 4 392 662 A, US 5 575 607 A, GB 2 154 543 A, US 2012/055898 A1, JP S53 911 78 U und JP S51 26701 A beschrieben US 2012/055898 A1 offenbart eine Hebe- und Transportvorrichtung nach dem Oberbegriff des Anspruchs 1.

Es ist daher eine Aufgabe der vorliegenden Erfindung, eine Hebe- und Transportvorrichtung der eingangs genannten Art zu schaffen, die flexibel einsetzbar ist.

Zur Lösung der erfindungsgemäßen Aufgabe schafft die vorliegende Erfindung eine Hebe- und Transportvorrichtung der eingangs genannten Art, deren Gestell wenigstens acht vertikale Stützen veränderbarer Länge umfasst. Erfindungsgemäß sind wenigstens vier vertikale Stützen veränderbarer Länge unter Zuordnung jeweils einer Ausfahreinrichtung und einer Arretiereinrichtung als Haltestützen ausgebildet. Die Ausfahreinrichtungen sind derart ausgelegt, dass sie eine Längenveränderung der Haltestützen nur dann ermöglichen, wenn die Haltestützen unbelastet sind. Die Arretiereinrichtungen sind derart ausgelegt, dass sie eine eingestellte Länge der Haltestützen derart arretieren, dass sie unter Last beibehalten wird. Da also Haltestützen geringere Anforderungen als Hebestützen erfüllen müssen, sind sie kostengünstiger in der Herstellung als Hebestützen.

Ein wesentlicher Vorteil eines Gestells mit wenigstens acht vertikalen Stützen veränderbarer Länge besteht darin, dass, wenn vier Stützen die Gewichtskraft der Schwerlast tragen, die übrigen Stützen dazu verwendet werden können, um insbesondere stufenförmige Höhendifferenzen auf dem Transportweg durch "Klettern" zu überwinden. Entsprechend kann die erfindungsgemäße Hebe- und Transportvorrichtung bei Bedarf auch direkt auf einem Sockel angeordnet werden. Somit ist es unerheblich, ob neben dem Sockel Aufstell- und Bewegungsfläche für die Stützen zur Verfügung steht oder nicht, was zu einer flexiblen Einsetzbarkeit der erfindungsgemäßen Hebe- und Transportvorrichtung führt.

Vorteilhaft sind die Hebestützen und die zugeordneten Hubeinrichtungen dazu ausgelegt, die Längen der Hebestützen um maximal 5 m zu verändern. Mit diesem Hubbereich lassen sich Höhendifferenzen herkömmlicher Sockel der eingangs genannten Art überwinden.

Gemäß einer Ausgestaltung der erfindungsgemäßen Hebe- und Transportvorrichtung weist das Gestell horizontale Querträger und/oder horizontale Längsträger auf, welche die vertikalen Stützen miteinander verbinden. Im Übrigen kann das Gestell auch wenigstens eine diagonale Strebe aufweisen, die sich zwischen den horizontalen Querträgern und den Längsträgern und/oder den vertikalen Stützen erstreckt. Derartige Träger und/oder Streben sind der Stabilität des Gestells zuträglich

Vorteilhaft sind die vertikalen Stützen quer zu der zumindest einen Verfahrrichtung paarweise jeweils einander gegenüberliegend an dem Gestell angeordnet. Entsprechend wird die Gewichtskraft einer an dem Gestell gehaltenen Schwerlast gleichmäßig verteilt und in den Untergrund eingeleitet.

Bevorzugt weisen die quer zu der zumindest einen Verfahrrichtung einander gegenüberliegend angeordneten vertikalen Stützen jeweils denselben Abstand voneinander auf. Mit anderen Worten sind die vertikalen Stützen an dem Gestell in zwei gegenüberliegenden Reihen angeordnet, die zueinander und zu der horizontalen Verfahrrichtung parallel ausgerichtet sind.

Vorteilhaft weisen die vertikalen Stützen veränderbarer Länge an ihren unteren freien Enden jeweils einen Gleitschuh auf oder sind mit Rollen versehen. Auf diese Weise wird ein möglichst reibungsarmes Verfahren in horizontaler Verfahrrichtung ermöglicht.

In Weiterbildung der vorliegenden Erfindung weist die Hebe- und Transportvorrichtung Gleitbahnen oder Schienen auf, auf denen das Gestell verfahrbar ist, wobei die Gleitbahnen oder Schienen zur Aufnahme der Gleitschuhe oder Rollen ausgebildet sind.

In einer erfindungsgemäßen Ausgestaltung ist bei der Hebe- und Transportvorrichtung eine Steuerung vorgesehen und dazu ausgelegt, das Verfahren des Gestells in der zumindest einen Verfahrrichtung und die Längenveränderung zumindest der Hebestützen zu steuern. Durch eine zentrale Steuerung lassen sich Längenveränderungen zumindest der Hebestützen und Verfahrrichtung sowie -geschwindigkeit des Gestells aufeinander abgestimmt steuern.

Bevorzugt sind die Haltestützen und die zugeordneten Ausfahreinrichtungen und Arretiereinrichtungen dazu ausgelegt, die Länge der Haltestützen um maximal 1,5 m zu verändern. Ein solcher Hubbereich erlaubt es, die Schwerlast maximal 1,5 m über dem umgebenden Boden angehoben zu halten.

Vorteilhaft ist jeder Hebestütze eine Haltestütze zugeordnet, die bevorzugt benachbart zu der Hebestütze angeordnet ist, insbesondere in einem Abstand zwischen 0,3 m und 1 m. Auf diese Weise werden an dem Gestell Paare vertikaler Stützen ausgebildet, die jeweils eine Hebestütze und eine Haltestütze umfassen. Innerhalb jedes Paares ist es möglich, durch eine Längenveränderung der Hebestütze ein Anheben der Schwerlast zu bewirken und in einem nächsten Schritt durch Nachführen der Haltestütze auf diese Höhe die Hebestütze zu entlasten.

Bevorzugt sind Hebestützen und Haltestützen bezogen auf die zumindest eine Verfahrrichtung abwechselnd angeordnet. Daraus folgt, dass in der zumindest einen Verfahrrichtung vordere Stützen Haltestützen und hintere Stützen Hebestützen oder vordere Stützen Hebestützten und hintere Stützen Haltestützen sind. Diese beiden Anordnungen der Hebestützen und Haltestützen eigenen sich für die entgegengesetzten Anwendungsfälle, dass die Schwerlast eine Stufe hinab bzw. eine Stufe hinauf transportiert werden soll.

Weiterhin schafft die vorliegende Erfindung ein Verfahren zum Transportieren einer Schwerlast, insbesondere eines Generators, von einem oder auf einen gegenüber einem umgebenden Boden erhabenen Sockel unter Verwendung einer erfindungsgemäßen Hebe- und Transportvorrichtung bei dem sich während des Transports der Schwerlast zumindest ein Zustand einstellt, bei dem sich zwei vertikale Stützen auf dem Sockel und zwei vertikale Stützen auf dem umgebenden Boden abstützen.

Eine vorteilhafte Weiterentwicklung des erfindungsgemäßen Verfahrens besteht darin, dass während des Transports ein Verfahren des Gestells in der zumindest einen horizontalen Verfahrrichtung und eine Längenveränderung vertikaler Stützen abwechselnd erfolgen.

Gemäß einer Ausgestaltung des erfindungsgemäßen Verfahrens werden erste Schienenabschnitte oder Gleitbahnabschnitte auf dem Sockel und zweite Schienenabschnitte oder Gleitbahnabschnitte auf dem umgebenden Boden angeordnet.

Weitere Merkmale und Vorteile der vorliegenden Erfindung werden anhand der nachfolgenden Beschreibung einer Ausführungsform der erfindungsgemäßen Hebe- und Transportvorrichtung unter Bezugnahme auf die beiliegende Zeichnung deutlich. Darin ist/sind
- Figur 1: eine perspektivische Ansicht einer Hebe- und Transportvorrichtung gemäß einer Ausgestaltung der vorliegenden Erfindung;
- Figur 2: eine vergrößerte Ansicht des in Figur 1 mit der Bezugsziffer II bezeichneten Ausschnitts;
- Figur 3: eine Seitenansicht der in Figur 1 dargestellten Hebe- und Transportvorrichtung;
- Figur 4: eine vergrößerte Ansicht des in Figur 3 mit der Bezugsziffer IV bezeichneten Ausschnitts
- Figur 5: eine Frontalansicht der in Figur 1 dargestellten Hebe- und Transportvorrichtung
- Figur 6: eine Seitenansicht eines ersten Zustands der in den Figuren 1 bis 5 dargestellten Hebe- und Transportvorrichtung, während eine Schwerlast von einem Sockel gehoben wird;
- Figur 7: eine Seitenansicht eines zweiten Zustands der in den Figuren 1 bis 5 dargestellten Hebe- und Transportvorrichtung, während eine Schwerlast von einem Sockel gehoben wird;
- Figur 8: eine Seitenansicht eines dritten Zustands der in den Figuren 1 bis 5 dargestellten Hebe- und Transportvorrichtung, während eine Schwerlast von einem Sockel gehoben wird;
- Figur 9: eine Seitenansicht eines vierten Zustands der in den Figuren 1 bis 5 dargestellten Hebe- und Transportvorrichtung, während eine Schwerlast von einem Sockel gehoben wird; und
- Figur 10: eine Seitenansicht eines fünften Zustands der in den Figuren 1 bis 5 dargestellten Hebe- und Transportvorrichtung, während eine Schwerlast von einem Sockel gehoben wird.

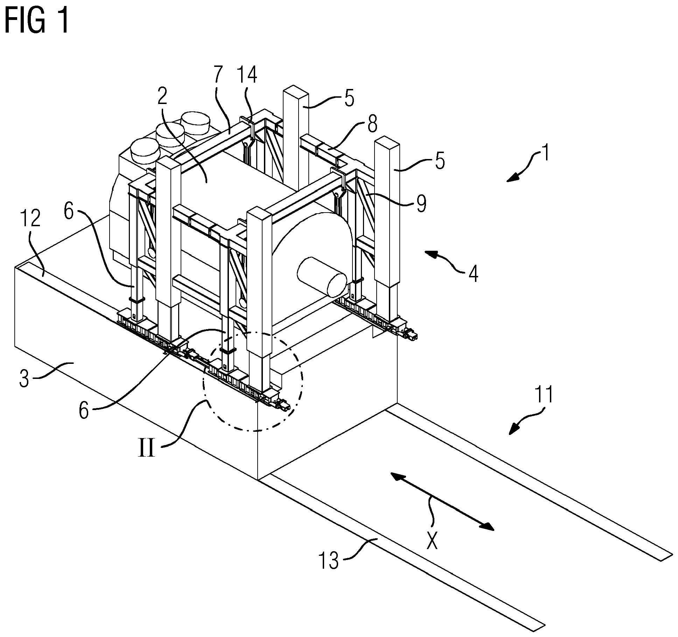

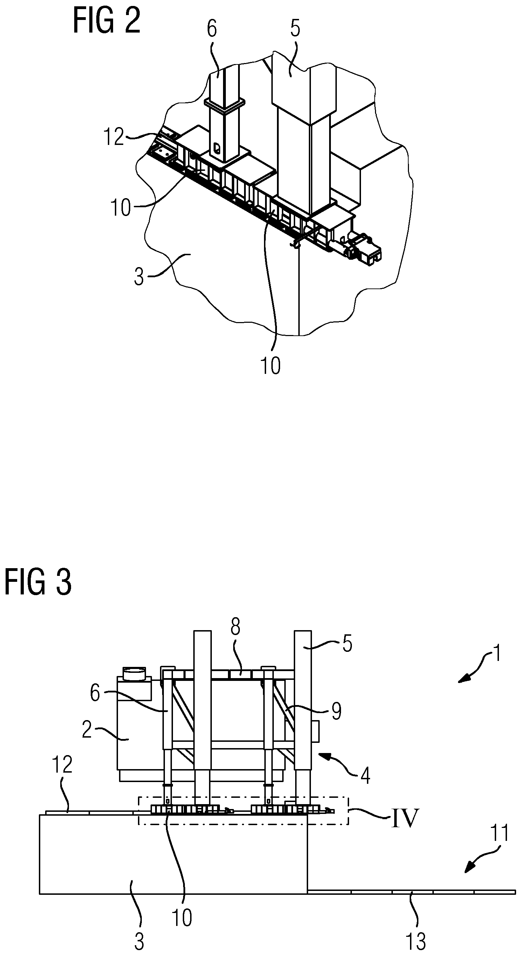

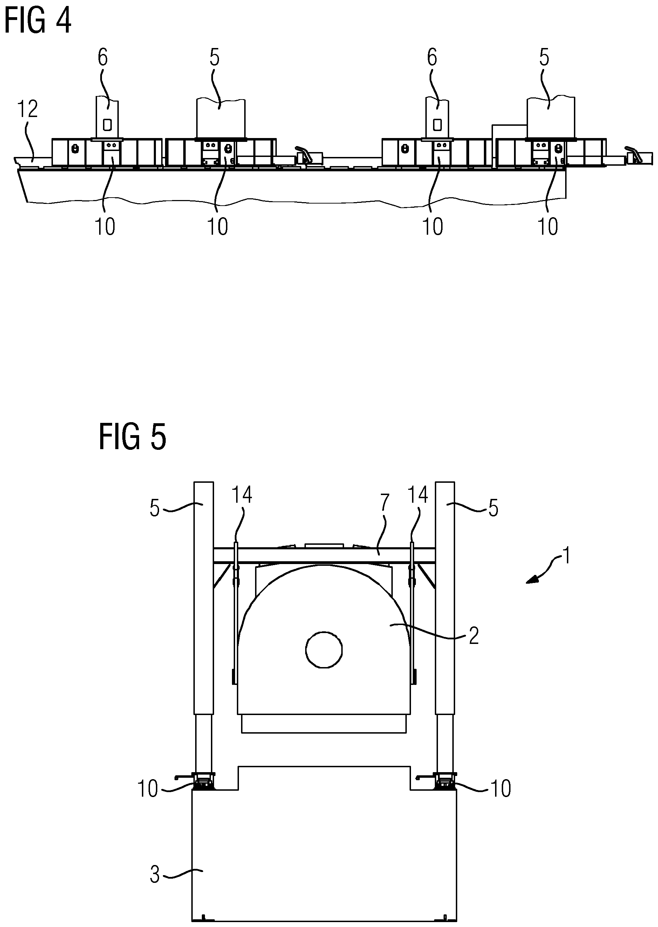

Die Figuren 1 bis 5 zeigen eine Hebe- und Transportvorrichtung 1 gemäß einer Ausgestaltung der vorliegenden Erfindung, die vorliegend dazu verwendet wird, eine Schwerlast 2, die auf einem gegenüber einem umgebenden Boden erhabenen Sockel 3 ruht, von dem Sockel 3 zu heben, wobei eine Höhe H des Sockels 3 3,5 m beträgt.

Die Hebe- und Transportvorrichtung 1 umfasst ein Gestell 4 mit acht vertikalen Stützen 5, 6 veränderbarer Länge, von denen vier als Hebestützen 5 und die übrigen vier als Haltestützen 6 ausgebildet sind. Jeder Hebestütze 5 ist eine Hubeinrichtung (nicht dargestellt) zugeordnet, die dazu ausgelegt ist, die Längen der Hebestützen 5 um maximal 5 m unter Belastung mit dem Eigengewicht der Schwerlast 2 zu verändern. Die Hebeeinrichtungen sind vorliegend hydraulisch betätigbar, wobei grundsätzlich auch andere Betätigungsarten möglich sind. Jeder Haltestütze 6 ist eine Ausfahreinrichtung (nicht dargestellt) und eine Arretiereinrichtung (nicht dargestellt) zugeordnet. Die Ausfahreinrichtungen und Arretiereinrichtungen sind dazu ausgelegt, die Längen der Haltestützen 6 um maximal 1,5 m insbesondere stufenlos zu verändern und innerhalb dieses Bereiches beliebig zu arretieren. Die Haltestützen 6 sind nur zu einer lastfreien Längenänderung ausgelegt und können beispielsweise einen Motorantrieb als Ausfahreinrichtung aufweisen. Alternativ können die Ausfahreinrichtungen aber auch zur manuellen Betätigung mit einem Kurbelantrieb oder dergleichen ausgestaltet sein.

Weiterhin umfasst das Gestell 4 eine Mehrzahl von horizontalen Querträgern 7 und horizontalen Längsträgern 8, welche die vertikalen Stützen 5, 6 miteinander verbinden. Zwischen den horizontalen Querträgern 7, den horizontalen Längsträgern 8 und den vertikalen Stützen 5, 6 ist eine Mehrzahl von diagonalen Streben 9 vorgesehen, um das Gestell 4 zu versteifen.

Das Gestell 4 ist in einer horizontalen Verfahrrichtung X vor und zurück verfahrbar. Dazu weisen die vertikalen Stützen 5, 6 an ihren unteren freien Enden jeweils einen Rollschuh 10 mit Rollen (nicht dargestellt) auf, der in Schienen 11 aufgenommen ist, die in der horizontalen Verfahrrichtung X auf gegenüberliegenden Seiten des Generators 2 angeordnet sind. Dabei ist jede Schiene 11 in einen ersten Schienenabschnitt 12, der auf dem Sockel 3 angeordnet ist, und einen zweiten Schienenabschnitt 13 unterteilt, der auf dem den Sockel 3 umgebenden Boden angeordnet ist. Alternativ können an den freien Enden der vertikalen Stützen 5, 6 auch Gleitschuhe vorgesehen sein, die an einer Gleitbahn aufgenommen sind.

Quer zu dieser Verfahrrichtung X sind die vertikalen Stützen paarweise jeweils einander gegenüberliegend angeordnet, und einander gegenüberliegend angeordnete vertikale Stützen 5, 6 weisen jeweils denselben Abstand voneinander auf. Mit anderen Worten sind die vertikalen Stützen 5, 6 auf beiden Seiten des Generators 2 in zwei gegenüberliegenden Reihen angeordnet. Dabei ist jeder Hebestütze 5 eine Haltestütze 6 zugeordnet, die benachbart zu der Hebestütze 5 positioniert ist und von dieser einen Abstand zwischen 0,3 m und 1 m aufweist. Die Paare zugeordneter vertikaler Stützen 5, 6 sind überdies derart angeordnet, dass sich Hebestützen 5 und Haltestützen 6 bezogen auf die Verfahrrichtung X abwechseln.

An den Querträgern 7 des Gestells 4 sind Anschlagmittel als Befestigungsmittel 14 vorgesehen, an denen der Generator 2 mit Stahlseilen angebracht ist. Weiterhin ist eine Steuerung (nicht dargestellt) vorgesehen und dazu ausgelegt, ein Verfahren des Gestells 4 in der Verfahrrichtung X und die Längenveränderung wenigstens der Hebestützen 5, bevorzugt aber aller vertikalen Stützen 5, 6 zu steuern.

Um den Generator 2 von dem Sockel 3 zu heben, werden auf dem Sockel 3 zunächst erste Schienenabschnitte 12 auf gegenüberliegenden Seiten des Generators 2 parallel zu der horizontalen Verfahrrichtung X angeordnet. Dann werden zweite Schienenabschnitte 13 auf dem den Sockel 3 umgebenden Boden derart befestigt, dass sie die ersten Schienenabschnitte 12 auf einer Höhe des umgebenden Bodens fortsetzen.

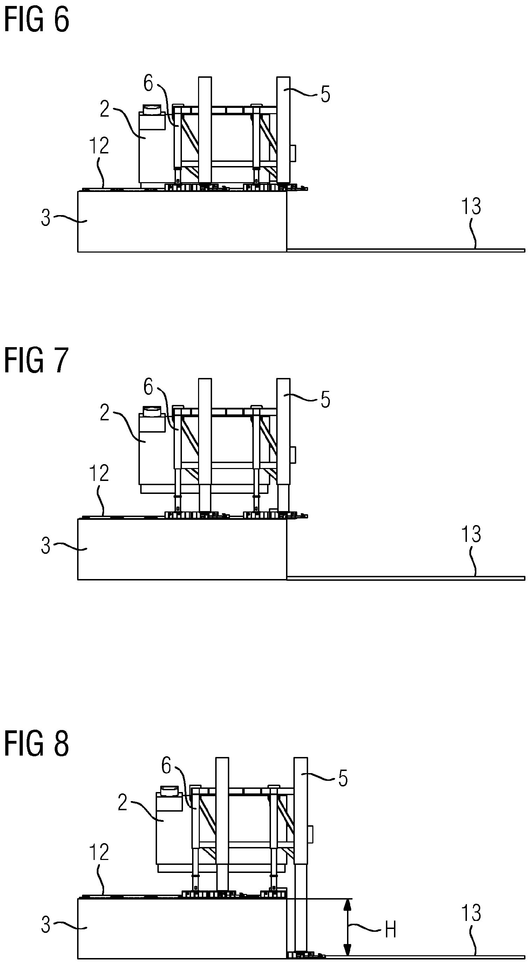

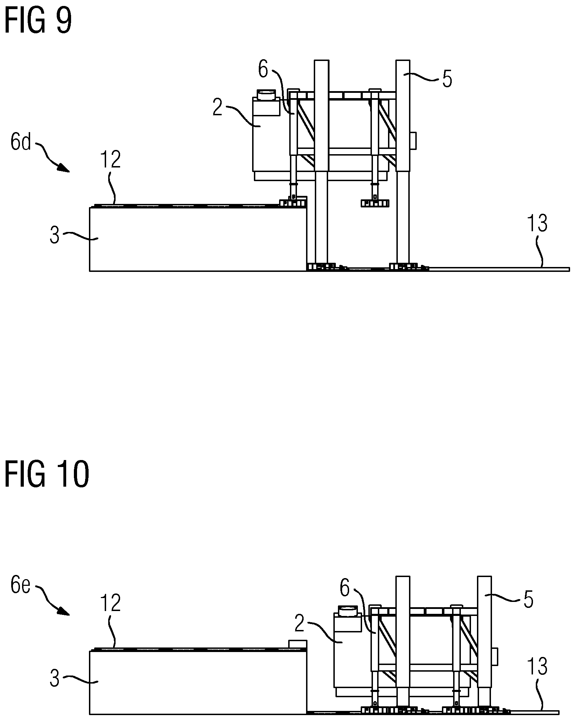

Das Gestell 4 der Hebe- und Transportvorrichtung 1 wird auf den Sockel 3 derart aufgesetzt, dass in der Verfahrrichtung X des Gestells 4 die vertikalen Stützen 5, 6 auf gegenüberliegenden Seiten des Generators 2 angeordnet sind, so dass die vorderen vertikalen Stützen 5 Hebestützen und die hinteren vertikalen Stützen Haltestützen 6 sind. Anschließend wird der Generator 2 unter Verwendung der Befestigungsmittel 14 an dem Gestell 4 angebracht (Zustand gemäß Figur 6). Der Generator 2 wird durch Verlängern der Hebestützen 5 derart angehoben, dass das Gestell 4 mit dem angehobenen Generator 2 horizontal auf dem Sockel 3 verfahrbar ist. Danach werden die Haltestützen 6 derart verlängert, dass sie auf dem Sockel 3 aufsetzen, und in diesem Zustand arretiert (Zustand gemäß Figur 7). Mit dem angehobenen Generator 2 wird das Gestell 4 horizontal in der Verfahrrichtung X verfahren, bis die vorderen Hebestützen 5 den Sockel 3 verlassen haben und keine Last mehr tragen. Das Gestell 4 steht nun auf den diesen vorderen Hebestützen 5 zugeordneten Haltestützen 6. In einem weiteren Schritt werden die vorderen Hebestützen 5 derart verlängert, dass sie auf den zweiten Schienenabschnitten 13 auf dem umgebenden Boden aufsetzen (Zustand gemäß Figur 8). Nun wird das Gestell 4 mit dem angehobenen Generator 2 horizontal weiter verfahren, bis nur noch die hinteren Haltestützen 6 auf dem Sockel 3 stehen. In diesem Zustand ruht das Gestell 4 auf den vorderen Hebestützen und den hinteren Haltestützen 6, während die diesen zugeordneten Hebestützen 5 keine Last tragen und verlängert werden, bis sie auf den zweiten Schienenabschnitten 13 aufsetzen (Zustand gemäß Figur 9). Nach einem weiteren Verfahren des Gestells 4 in der horizontalen Verfahrrichtung X werden alle Hebestützen 5, wenn die hinteren Haltestützen 6 den Sockel 3 verlassen haben, derart verkürzt, dass die Haltestützen 6 auf den zweiten Schienenabschnitten 13 auf dem umgebenden Boden aufsetzen (Zustand gemäß Figur 10). In diesem Zustand kann das Gestell 4 mit dem angehobenen Generator 2 auf dem umgebenden Boden horizontal aus der Kraftwerkhalle zu dem Modulfahrzeug verfahren werden, um darauf zum Weitertransport abgesetzt zu werden.

Um einen Generator 2 von einem umgebenden Boden auf einen gegenüber dem umgebenden Boden erhöhten, als Maschinenfundament dienenden Sockel 3 zu transportieren, werden die zuvor beschriebenen Verfahrensschritte im Wesentlichen in umgekehrter Reihenfolge ausgeführt mit der Maßgabe, dass zunächst das Gestell 4 in der horizontalen Verfahrrichtung X derart angeordnet sein muss, dass vordere vertikale Stützen als Haltestützen 6 und hintere vertikale Stützen als Hebestützen 5 ausgebildet sind. Darüber hinaus wird der Generator 2 durch Verlängern der Hebestützen 5 von dem umgebenden Boden derart angehoben, dass die vorderen Haltestützen 6 des Gestells 4 vollständig über den Sockel 3 verfahren werden können, bis sie über dem Sockel 3 angeordnet sind. Dann werden die Hebestützen 5 derart verkürzt, dass die vorderen Haltestützen 6 auf dem Sockel 3 aufsetzen. Dieser Unterschied trägt dem Umstand Rechnung, dass es schwierig ist, die zu der Höhe des Sockels 3 exakt passende Länge der Hebestützen 5 im Voraus zu bestimmen, bevor die Haltestützen 6 auf dem Sockel 3 aufgesetzt sind.

Das beschriebene Verfahren zum Heben und Transportieren eines Generators unter Verwendung der erfindungsgemäßen Hebe- und Transportvorrichtung 1 ist dahingehend von Vorteil, dass quer zu der horizontalen Verfahrrichtung X kein Platz neben dem Sockel 3 benötigt wird, weshalb die erfindungsgemäße Hebe- und Transportvorrichtung 1 sehr flexibel eingesetzt werden kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Hebe- und Transportvorrichtung (1) zum Heben und Transportieren einer Schwerlast (2), umfassend ein zumindest in einer horizontalen Verfahrrichtung (X) vor und zurück verfahrbares Gestell (4) mit vier vertikalen Stützen (5) veränderbarer Länge, die unter Zuordnung jeweils einer Hubeinrichtung als Hebestützen (5) ausgebildet sind, und an dem Gestell (4) vorgesehene Befestigungsmittel (14) zum lösbaren Anbringen der Schwerlast (2), **dadurch gekennzeichnet, dass** das Gestell (4) wenigstens acht vertikale Stützen (5, 6) veränderbarer Länge und, dass wenigstens vier vertikale Stützen (6) veränderbarer Länge unter Zuordnung jeweils einer Ausfahreinrichtung und einer Arretiereinrichtung als Haltestützen (6) derart ausgebildet sind, dass sich die Längen der Haltestützen (6) variabel arretieren lassen, insbesondere stufenlos, die Ausfahreinrichtungen derart ausgelegt sind, dass sie eine Längenveränderung der Haltestützen (6) nur dann ermöglichen, wenn die Haltestützen (6) unbelastet sind, und die Arretiereinrichtungen derart ausgelegt sind, dass sie eine eingestellte Länge der Haltestützen (6) derart arretieren, dass sie unter Last beibehalten wird.

2. Hebe- und Transportvorrichtung (1) nach Anspruch 1,
**dadurch gekennzeichnet, dass**
die Hebestützen (5) und die zugeordneten Hubeinrichtungen dazu ausgelegt sind, die Längen der Hebestützen (5) um maximal 5 m zu verändern.

3. Hebe- und Transportvorrichtung (1) nach einem der vorhergehenden Ansprüche,
**dadurch gekennzeichnet, dass**
das Gestell (4) horizontale Querträger (7) und/oder horizontale Längsträger (8) aufweist,
welche die vertikalen Stützen (5) miteinander verbinden.

4. Hebe- und Transportvorrichtung (1) nach einem der vorhergehenden Ansprüche,
**dadurch gekennzeichnet, dass**
das Gestell (4) wenigstens eine diagonale Strebe (9) aufweist,
die sich zwischen den horizontalen Querträgern (7) und den Längsträgern (8) und/oder
den vertikalen Stützen (5, 6) erstreckt.

5. Hebe- und Transportvorrichtung (1) nach einem der vorhergehenden Ansprüche,
**dadurch gekennzeichnet, dass**
quer zu der zumindest einen Verfahrrichtung (X) die vertikalen Stützen (5, 6) paarweise jeweils einander gegenüberliegend an dem Gestell (4) angeordnet sind.

6. Hebe- und Transportvorrichtung (1) nach Anspruch 5,
**dadurch gekennzeichnet, dass**
die quer zu der zumindest einen Verfahrrichtung (X) einander gegenüberliegend angeordneten vertikalen Stützen (5, 6) jeweils denselben Abstand voneinander aufweisen.

7. Hebe- und Transportvorrichtung (1) nach einem der vorhergehenden Ansprüche,
**dadurch gekennzeichnet, dass**
die vertikalen Stützen (5, 6) an ihren unteren freien Enden jeweils einen Gleitschuh aufweisen oder mit Rollen (10) versehen sind.

8. Hebe- und Transportvorrichtung (1) nach Anspruch 7,
**dadurch gekennzeichnet, dass**
Gleitbahnen oder Schienen (11) vorgesehen sind, auf denen das Gestell (4) verfahrbar ist,
wobei die Gleitbahnen oder Schienen (11) zur Aufnahme der Gleitschuhe oder Rollen (10) ausgebildet sind.

9. Hebe- und Transportvorrichtung (1) nach einem der vorhergehenden Ansprüche,
**dadurch gekennzeichnet, dass**
eine Steuerung vorgesehen und dazu ausgelegt ist, das Verfahren des Gestells (4) in der zumindest einen Verfahrrichtung (X) und
die Längenveränderung zumindest der Hebestützen (5) zu steuern.

10. Hebe- und Transportvorrichtung (1)einem der vorhergehenden Ansprüche,
**dadurch gekennzeichnet, dass**
die Haltestützen (6) und die zugeordneten Ausfahreinrichtungen und Arretiereinrichtungen dazu ausgelegt sind, die Länge der Haltestützen (6) um maximal 1,5 m zu verändern.

11. Hebe- und Transportvorrichtung (1) nach einem der vorhergehenden Ansprüche,
**dadurch gekennzeichnet, dass**
jeder Hebestütze (5) eine Haltestütze (6) zugeordnet ist, die bevorzugt benachbart zu der Hebestütze (5) angeordnet ist,
insbesondere in einem Abstand zwischen 0,3 m und 1 m.

12. Hebe- und Transportvorrichtung (1) nach einem der vorhergehenden Ansprüche,
**dadurch gekennzeichnet, dass**
Hebestützen (5) und Haltestützen (6) bezogen auf die zumindest eine Verfahrrichtung (X) abwechselnd angeordnet sind.

13. Verfahren zum Transportieren einer Schwerlast (2), insbesondere eines Generators,
von einem oder auf einen gegenüber einem umgebenden Boden erhabenen Sockel (3) unter Verwendung einer Hebe- und Transportvorrichtung (1) nach einem der vorhergehenden Ansprüche,
**dadurch gekennzeichnet, dass**
sich während des Transports der Schwerlast (2) zumindest ein Zustand einstellt, bei dem sich zwei vertikale Stützen (5, 6) auf dem Sockel (3) und
zwei vertikale Stützen (5, 6) auf dem umgebenden Boden abstützen.

14. Verfahren nach Anspruch 13,
**dadurch gekennzeichnet, dass**
während des Transports ein Verfahren des Gestells (4) in der zumindest einen horizontalen Verfahrrichtung (X) und eine Längenveränderung vertikaler Stützen (5, 6) abwechselnd erfolgen.

15. Verfahren nach einem der Ansprüche 13 oder 14,
**dadurch gekennzeichnet, dass**
bei Verwendung einer Hebe- und Transportvorrichtung (1) nach Anspruch 7 erste Schienenabschnitte (12) oder Gleitbahnabschnitte auf dem Sockel (3) und
zweite Schienenabschnitte (13) oder Gleitbahnabschnitte auf dem umgebenden Boden angeordnet werden.

## Claims

1. Lifting and transport apparatus (1) for lifting and transporting a heavy load (2),
comprising a frame (4) which is movable back and forth at least in a horizontal movement direction (X) and has four vertical supports (5) of adjustable length,
which vertical supports are designed as lifting supports (5), with one lifting device assigned in each case, and comprising
fastening means (14) which are provided on the frame (4) and serve for the releasable attachment of the heavy load (2),
**characterized in that**
the frame (4) comprises at least eight vertical supports (5, 6) of adjustable length, and
**in that**
at least four vertical supports (6) of adjustable length are designed as retaining supports (6), with one extension device and one locking device assigned in each case, such that the lengths of the retaining supports (6) can be locked in a variable, in particular stepless, manner,
the extension devices are designed such that they allow length adjustment of the retaining supports (6) only when the retaining supports (6) are not subjected to load, and the locking devices are configured such that they lock a set length of the retaining supports (6) such that said length is maintained under load.

2. Lifting and transport apparatus (1) according to Claim 1,
**characterized in that**
the lifting supports (5) and the assigned lifting devices are configured to adjust the lengths of the lifting supports (5) by a maximum of 5 m.

3. Lifting and transport apparatus (1) according to either of the preceding claims,
**characterized in that**
the frame (4) has horizontal cross members (7) and/or horizontal longitudinal members (8)
which connect the vertical supports (5) to one another.

4. Lifting and transport apparatus (1) according to one of the preceding claims,
**characterized in that**
the frame (4) has at least one diagonal strut (9) which extends between the horizontal cross members (7) and the longitudinal members (8) and/or
the vertical supports (5, 6).

5. Lifting and transport apparatus (1) according to one of the preceding claims,
**characterized in that**,
transverse to the at least one movement direction (X), the vertical supports (5, 6) are arranged on the frame (4) opposite one another in pairs in each case.

6. Lifting and transport apparatus (1) according to Claim 5,
**characterized in that**
the vertical supports (5, 6) arranged opposite one another transverse to the at least one movement direction (X) are in each case at the same distance from one another.

7. Lifting and transport apparatus (1) according to one of the preceding claims,
**characterized in that**
the vertical supports (5, 6), on their lower, free ends, in each case have a sliding shoe or are equipped with rollers (10).

8. Lifting and transport apparatus (1) according to Claim 7,
**characterized in that**
sliding tracks or rails (11) on which the frame (4) is movable are provided,
wherein the sliding tracks or rails (11) are designed for receiving the sliding shoes or rollers (10).

9. Lifting and transport apparatus (1) according to one of the preceding claims,
**characterized in that**
a controller is provided and is configured to control the movement of the frame (4) in the at least one movement direction (X) and
the length adjustment of at least the lifting supports (5).

10. Lifting and transport apparatus (1) according to one of the preceding claims,
**characterized in that**
the retaining supports (6) and the assigned extension devices and locking devices are configured to adjust the length of the retaining supports (6) by a maximum of 1.5 m.

11. Lifting and transport apparatus (1) according to one of the preceding claims,
**characterized in that**
each lifting support (5) is assigned one retaining support (6) which is preferably arranged adjacent to the lifting support (5), in particular at a distance of between 0.3 m and 1 m.

12. Lifting and transport apparatus (1) according to one of the preceding claims,
**characterized in that**
lifting supports (5) and retaining supports (6) are arranged in an alternating manner with respect to the at least one movement direction (X).

13. Method for transporting a heavy load (2),
in particular a generator,
from or onto a base (3), which is raised in relation to a surrounding floor, using a lifting and transport apparatus (1) according to one of the preceding claims, **characterized in that**,
during the transport of the heavy load (2), at least one state is assumed in which two vertical supports (5, 6) are supported on the base (3) and
two vertical supports (5, 6) are supported on the surrounding floor.

14. Method according to Claim 13,
**characterized in that**,
during transport, movement of the frame (4) in the at least one horizontal movement direction (X) and length adjustment of vertical supports (5, 6) occur in an alternating manner.

15. Method according to either of Claims 13 and 14,
**characterized in that**,
during use of a lifting and transport apparatus (1) according to Claim 7, first rail sections (12) or sliding track sections are arranged on the base (3), and second rail sections (13) or sliding track sections are arranged on the surrounding floor.

## Revendications

1. Installation (1) de levage et de transport pour lever et transporter une charge (2) lourde,
comprenant au moins un échafaudage (4), pouvant aller et revenir au moins dans une direction (X) de déplacement horizontal ayant quatre montants (5) verticaux de longueur variable,
qui sont constitués, avec association chacun d'un dispositif de levage, sous la forme de montants (5) de levage et
des moyens (14) de fixation prévus sur l'échafaudage (4) pour la mise de manière amovible de la charge (2) lourde, **caractérisée en ce que**
l'échafaudage (4) a au moins quatre montants (5, 6) verticaux de longueur variable et
**en ce que**
au moins quatre montants (6) verticaux de longueur variable sont constitués avec association chacun d'un dispositif de déploiement et d'un dispositif de blocage, en montants (6) d'arrêt, de manière à ce que les longueurs des montants (6) d'arrêt puissent être bloquées de manière variable, notamment de façon continue, les dispositifs de déploiement étant conçus de manière à ne permettre une variation de la longueur des montants (6) d'arrêt que si les montants (6) d'arrêt ne sont pas chargés et les dispositifs de blocage sont conçus de manière à bloquer une longueur réglée des montants (6) d'arrêt, de manière à la conserver sous charge.

2. Installation (1) de levage et de transport suivant la revendication 1,
**caractérisée en ce que**
les montants (5) de levage et les dispositifs de levage associés sont conçus pour faire varier les longueurs des montants (5) de levage de 5 m au maximum.

3. Installation (1) de levage et de transport suivant l'une des revendications précédentes,
**caractérisée en ce que**
l'échafaudage (4) a des traverses (7) horizontales et/ou des longerons (8) horizontaux,
qui relient entre eux les montants (5) verticaux.

4. Installation (1) de levage et de transport suivant l'une des revendications précédentes,
**caractérisée en ce que**
l'échafaudage (4) a au moins une diagonale (9),
qui s'étend entre les traverses (7) horizontales et les longerons (8) horizontaux et/ou
les montants (5, 6) verticaux.

5. Installation (1) de levage et de transport suivant l'une des revendications précédentes,
**caractérisée en ce que**
transversalement à la au moins une direction (X) de déplacement, les montants (5, 6) verticaux sont disposés sur l'échafaudage (4) par paire en étant opposés les uns aux autres.

6. Installation (1) de levage et de transport suivant la revendication 5,
**caractérisée en ce que**
les montants (5, 6) verticaux, disposés en étant opposés les uns aux autres transversalement à la au moins une direction (X) de déplacement, ont chacun la même distance entre eux.

7. Installation (1) de levage et de transport suivant l'une des revendications précédentes,
**caractérisée en ce que**
les montants (5, 6) verticaux ont, à leur extrémité inférieure libre, chacun un patin ou des roulettes (10).

8. Installation (1) de levage et de transport suivant la revendication 7,
**caractérisée en ce qu'**
il est prévu des glissières ou des rails (11) sur lesquels l'échafaudage (4) peut être déplacé,
les glissières ou les rails (11) étant constitués pour la réception des patins ou des roulettes (10).

9. Installation (1) de levage et de transport suivant l'une des revendications précédentes,
**caractérisée en ce qu'**
une commande est prévue et conçue de manière à commander le déplacement de l'échafaudage (4) dans la au moins une direction (X) de déplacement et
à commander la variation de longueur au moins des montants (6) de levage.

10. Installation (1) de levage et de transport suivant l'une des revendications précédentes,
**caractérisée en ce que**
les montants (6) d'arrêt et les dispositifs de déploiement et les dispositifs de blocage associés sont conçus pour faire varier la longueurs des montants (6) d'arrêt de 1,5 m au maximum.

11. Installation (1) de levage et de transport suivant l'une des revendications précédentes,
**caractérisée en ce qu'**
à chaque montant (5) de levage est associé un montant (6) d'arrêt, qui est disposé de préférence au voisinage du montant (5) de levage,
notamment à une distance comprise entre 0,3 m et 1 m.

12. Installation (1) de levage et de transport suivant l'une des revendications précédentes,
**caractérisée en ce que**
des montants (5) de levage et des montants (6) d'arrêt sont disposés en alternance rapporté à la au moins une direction (X) de déplacement.

13. Procédé de transport d'une charge (2) lourde,
notamment d'un générateur,
d'un ou sur un socle (3) en relief par rapport à un sol environnant, en utilisant une installation (1) de levage et de transport suivant l'une des revendications précédentes, **caractérisé en ce que**
pendant le transport de la charge (2) lourde, on établit au moins un état, dans lequel deux montants (5, 6) verticaux s'appuient sur le socle (3) et
deux montants (5, 6) verticaux s'appuient sur le sol environnant.

14. Procédé suivant la revendication 13,
**caractérisé en ce que**
pendant le transport, on effectue en alternance un déplacement de l'échafaudage (4) dans la au moins une direction (X) de déplacement horizontale et une variation de longueur des montants (5, 6) verticaux.

15. Procédé suivant l'une des revendications 13 ou 14,
**caractérisé en ce que**,
lorsque l'on utilise une installation (1) de levage et de transport suivant la revendication 7, on met des premières parties (12) de rail ou des premières parties de patin sur le socle (3) et
des deuxièmes parties (13) de rail ou des deuxièmes parties de patin sur le sol environnant.
